# EUROPEAN PATENT SPECIFICATION

(11) **EP 3 655 353 B1**
(45) Date of publication and mention of the grant of the patent: **25.08.2021**
(21) Application number: 17791736.6
(22) Date of filing: 27.09.2017
(51) Int. Cl.: B65G 54/02, B65B 61/18, B65B 65/02, B65B 59/00, B65B 55/02, B65B 7/28, B65B 51/26, B65B 51/14, B65B 43/32, B65B 43/04, B65B 3/02, B65B 3/04, B65B 43/48, B65G 25/08, B65G 25/04

(54) **A POUCH HANDLING MACHINE WITH RECIPROCATING BEAMS CONVEYOR.**
BEUTELHANDHABUNGSMASCHINE MIT HUBBALKENFÖRDERER
MACHINE DE MANIPULATION DE SACHETS DOTÉE D'UN TRANSPORTEUR À POUTRES À MOUVEMENT ALTERNATIF

(30) Priority: 17.07.2017 ES 201700673
(43) Date of publication of application: 27.05.2020
(73) Proprietor: Bossar Packaging, S.A., 08210 Barbera Del Valles-Barcelona (ES)
(72) Inventor: SÁEZ LÓPEZ, Abel, 08210 Barberà Del Vallès Barcelona (ES); CAÑADA CODINA, Jordi, 08210 Barberà Del Vallès Barcelona (ES)
(74) Representative: Manresa Medina, José Manuel
(86) International application number: PCT/IB2017/055890
(87) International publication number: WO 2019/016581

(56) References cited:
- DE-A1-102004 056 691
- ES-U- 1 040 575
- US-A- 6 050 061
- US-A1- 2017 096 247
- US-A1- 2017 152 067

## Description

The present invention relates to a pouch handling machine comprising a frame, multiple pouch related process stations arranged in series on the frame, and a reciprocating beams conveyor that is adapted to advance pouches intermittently in a horizontal path along said series of multiple stations. In the field of pouch handling machinery this type of conveyor is also referred to as a walking beam conveyor.

In the field of pouch handling machinery, a reciprocating beams conveyor is a well-known and often implemented mechanism to obtain a step by step motion of the pouches from one station to the next. For example, open topped pouches are opened at a first station, filled at a second station, e.g. with a liquid, and then moved to a third station wherein a spout with cap thereon is sealed into the open top so that the pouch is closed. In another known arrangement an open topped pouch is first opened at a first station, a non-capped spout is sealed into the top of the pouch at a second station, the pouch is filled through the spout at a third station, and a capping station places a cap on the spout in a fourth station.

Generally, in a reciprocating beams conveyor there are a left-hand side and a right-hand side elongated beam. Each of these reciprocating beams is provided at intervals along the length thereof with one or more pouch retention members, for example a pair of pouch gripping studs of which the longitudinal position along the reciprocating beam is adjustable to adapt the conveyor to the dimensions of the pouch to be conveyed. In some designs pouches are advanced one by one, in another known design pouches are advanced in sets, e.g. in pairs or three or four, from station to station, with the stations being adapted to handle the set of pouches.

The reciprocating beams are supported respectively by a left-hand side and a right-hand side support member. The guide members form a linear guide for the respective reciprocating beam. A longitudinal reciprocating motion drive mechanism of the machine causes an intermittent reciprocating motion of the reciprocating beams in the longitudinal direction thereof, whilst a transverse motion mechanism cause a periodic transverse motion of the left-hand side and a right-hand side support members towards and away from one another in order to clamp a pouch between opposed pouch retention members of the left-hand and right-hand reciprocating beams and to release a pouch. This operation is well-known to the skilled person. The stations are equipped with further pouch retainer mechanisms to hold the pouch or pouches during the treatment at the respective station.

In a known arrangement of the longitudinal reciprocating motion drive mechanism a horizontal shaft journalled to the frame perpendicular to the path of the conveyor is driven by a motor to perform an angular back and forth rocking motion about its axis. This shaft is provided with one or two rocker arms that extend radially from the shaft. A left-hand and a right-hand linkage rod are provided. Each linkage rod is hinged to an end of the respective reciprocating beam at one end of the linkage rod and to the rocker arm at the other end. An example thereof is schematically shown in ES 1 040 575.

Further, US 2007/152067 "Packaging machine and packaging method" refers to a packaging machine that includes a linear type conveyance unit conveying a bag linearly in a first direction, a rotary type conveyance unit conveying the bag rationally in a second direction, a delivery unit delivering the bag between the linear type and the rotary type conveyance units, a first processing system performing processing on the bag conveyed by the linear type conveyance unit and a second processing system performing processing on the bag conveyed by the rotary type conveyance unit. The linear type conveyance unit includes a first supporting unit moving from a first conveyance position to a second conveyance position while supporting the bag in a suspended state, and a second supporting unit which receives the bag from the first supporting unit at the second conveyance position and supports the bag in a suspended state. The second processing system includes an opening processing unit.

Additionally, it is worth to mention the document DE 102004056691A1 "Stacked articles relocating device, has guide designed as fixed part of electromagnetic linear drive, and attachment connected with movable part of linear drive and relocated along fixed part". This document describes the device with an attachment that is displaced along a guide and a drive for moving the attachment. The attachment is arranged at a stack in order to relocate the stack by operating the drive. The guide is designed as a fixed part of an electromagnetic linear drive. The attachment is connected with a movable part of the linear drive and is relocated along the fixed part, where a cylinder forma the attachment.

It is an object of the present invention to provide an improved pouch handling machine with a reciprocating beams conveyor.

It is a further object of the invention to provide an improved handling machine of the type wherein open topped pouches are filled at one station with liquid and then the pouch is sealed at a later, downstream station. For example, it is desired to increase the speed of the machine, so that more pouches can be filled and handled per hour.

It is a further object of the invention to provide an improved pouch handling machine in view of the increase variety of pouch dimensions and shapes.

The present invention achieves one or more of the above goals by providing a pouch handling machine comprising a frame, multiple pouch related process stations arranged on the frame in series, and a reciprocating beams conveyor that is adapted to advance pouches intermittently in a horizontal path along the series of multiple stations, wherein the reciprocating beams conveyor comprises:
- a left-hand side and a right-hand side elongated reciprocating beam, each of said reciprocating beams being provided at intervals along the length thereof with pouch retention members,
- a left-hand side and a right-hand side support member, each of said support members supporting and forming a linear guide for said left-hand side and right-hand side reciprocating beam respectively,
- a longitudinal reciprocating motion drive mechanism adapted to cause an intermittent reciprocating motion of the reciprocating beams in the longitudinal direction thereof,
- a transverse motion mechanism adapted to cause a periodic transverse motion of the left-hand side and a right-hand side support members towards and away from one another in order to clamp a pouch between opposed pouch retention members of the left-hand and right-hand reciprocating beams and to release a pouch,
characterized in that
the longitudinal reciprocating motion drive mechanism comprises a left-hand side and a right-hand side electromagnetic linear actuator, each of said electromagnetic linear actuators being mounted between the respective reciprocating beams and the respective support member,
and in that said electromagnetic linear actuators are linked to an electronic controller that is adapted to synchronize the motions of the electromagnetic linear actuators, said controller is provided with a memory wherein, for each of multiple pouch types a respective data set at least representing an actuator motion profile to be performed by each of the actuators when handling the corresponding pouch type, e.g. wherein the data set comprises a profile of linear speed and/or acceleration of the electromagnetic linear actuator as well as stop positions of the electromagnetic linear actuator.

This arrangement allows for many advantages over prior art reciprocating beams pouch conveyors. For example, the linear speed of the reciprocating beams in their longitudinal direction can be controlled accurately and more importantly acceleration from a stop position and braking when arriving at a stop position can be controlled. This allows for optimization of speed of the machine per hour in view of desired accuracy of the alignment of the pouch with the various stations. Furthermore, the forward speed of the reciprocating beams is now fully independent from the rearward or return motion speed of the reciprocating beams, which for example allows for a very rapid return motion whilst at the same time avoiding undue accelerations and declarations that may cause undue strains on the machine parts involved. A rapid return may be used to achieve an increase of overall hourly speed of the machine, or the time gain may be used to have a relatively slow forward motion, for example in order to handle low viscosity, e.g. watery, liquid filled into open topped pouches without sloshing causing spillage or the risk thereof before the pouch has been sealed.

The electromagnetic linear actuators are each arranged between the support member and the reciprocating beams, and synchronicity is achieved in electronic manner. This allows for optimized use of the potential of these actuators, e.g. in view of accuracy, speed, acceleration and deceleration. For example, due to the specific location of the actuators it is generally only the inertia of the reciprocating beams that the actuators need to handle as no intermediate mechanical transmission parts are required between the linear actuator and the reciprocating beams.

It will be appreciated that the electromagnetic linear actuators are preferably controlled on the basis of some servo control system.

In an embodiment the electromagnetic linear actuators are of the tubular linear motor type with a rod wherein an array of magnets is housed and with a block through which the rod is longitudinally mobile and with one or more electrical coils in the block being adapted to create a magnetic propulsion force in combination with the rod when the one or more coils are energized. In the art, the block is also often referred to as the "forcer". This design is advantageous in a pouch handling machine, for example in view of handling of food stuffs to be filled into the pouches, which application requires regular cleaning of the machine.

Preferably the rod is of stainless steel material.

In an embodiment the block is mounted to the respective support member and the rod is secured, e.g. at both ends thereof, to the respective reciprocating beams. This allows for easy connection of the block via one or more electrical lines to the controller as the block does not move in the longitudinal direction as does the rod and the reciprocating beam.

It will be appreciated that in an optimum design the rod of the actuator is arranged parallel to the respective reciprocating beam, e.g. in an embodiment wherein both ends of the rod are secured to the reciprocating beam.

In an embodiment the frame of the machine is provided with rectilinear transverse guide members and the support members are mounted on these transverse guide members such that the transverse motion mechanism causes a periodic rectilinear transverse motion of the left-hand side and a right-hand side support members away from and towards one another. It is noted that other motion mechanisms for the support members are also possible, yet less preferred, e.g. with the support members having lower ends that are pivoted about a horizontal axis to achieve the motion of the reciprocating beams away and towards one another.

In an embodiment the pouch process stations comprises one or more of:
- a sterilization station,
- a filling station,
- a spout placement station,
- a spout sealing station,
- a pouch sealing station,
- a spout capping station.

As explained herein the innovative reciprocating beams conveyor is in particular suited for machines wherein the filling station is a liquid filling station, so embodied to fill the pouch with a liquid, in particular to fill an open topped pouch with a liquid. As explained the electromagnetic linear actuators allow for accurate control of the motion of the pouch, and this allows to avoid sloshing and related spillage of liquid via the open top whilst at the same time a high hourly processing speed of the machine can be achieved. Therefore, a preferred embodiment of the machine according to the invention is provided with a liquid filling station adapted for filling liquid into an open topped pouch and with a sealing station downstream thereof along the reciprocating beams conveyor. The sealing may be a direct seal between the film walls of the pouch, or the sealing of a spout into the open top, e.g. a spout that has already been provided with a cap or other closure.

In an embodiment the machine comprises upstream of the reciprocating beams conveyor a pouch making installation adapted to make individual pouches from heat-sealable film. Such installations are well-known in the art. These individual pouches are then transferred at a transfer point to the reciprocating beams conveyor of the machine.

For example, the machine is provided with a device for vertically forming a tubular body of heat sealable film material, making horizontal welds at intervals across the tubular body, and cutting the welded tubular body by horizontal cuts into open topped pouches that are then transferred to the horizontally arranged reciprocating beams conveyor for further pouch related processing at various stations along the conveyor. For example, the machine is structured as disclosed in US2017/0096247.

The machine may comprise an operator selector device, e.g. a touchscreen, allowing a machine operator to select the appropriate pouch type upon which the controller will select the appropriate actuator motion profile data set from the memory and control the reciprocating beams conveyor accordingly.

The machine may comprise a display, e.g. a touchscreen, and be embodied to display thereon the selected actuator motion profile in graphical form, e.g. as a graph or graphs representing speed and/or acceleration/deceleration in relation to longitudinal position of the reciprocating beams.

The present invention also relates to a method for handling of pouches according to appended claim 11.

According to the invention, the method comprises the step of selecting a pouch type, e.g. on a touchscreen, by an operator, wherein the controller selects on the basis thereof a respective actuator motion profile data set from a memory and controls the reciprocating beams conveyor accordingly.

The invention will now be described in more detail with reference to the drawings. In the drawings:
Fig. 1 shows the frame, reciprocating beams conveyor, and stations of a pouch handling machine according to the invention in a perspective view,
Fig. 2 shows the machine of figure 1 in a front view,
Fig. 3 shows the reciprocating beams conveyor and stations of figure 1 from above,
Fig. 4 shows the reciprocating beams conveyor and stations of figure 1 from below,
Fig. 5 shows the leading end of the conveyor of the machine of figure 1,
Fig. 6 shows exemplary graphs of longitudinal position, speed, and accelerations of the reciprocating beams as obtained by a drive of the type as discussed in ES 1 040 575,
Fig. 7 shows exemplary graphs of longitudinal position, speed, and accelerations of the reciprocating beams as obtainable by a drive according to the invention.

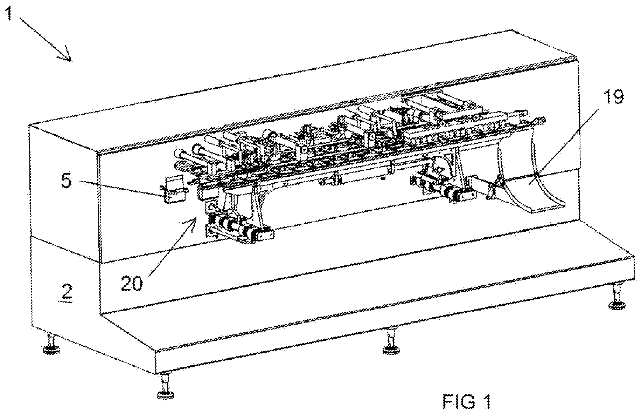

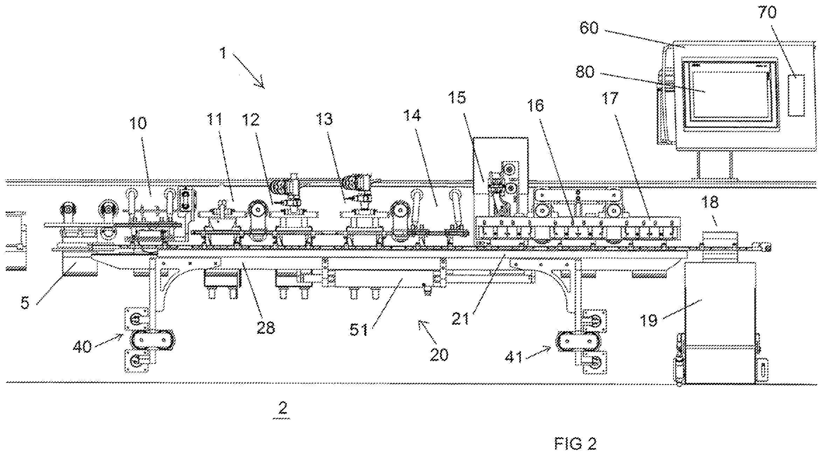

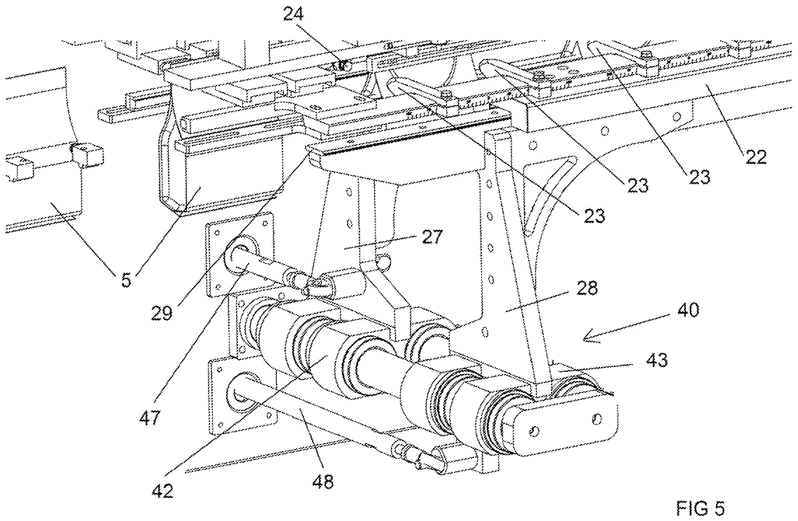

With reference to figures 1 - 5 now an example of a pouch handling machine 1 according to the invention will be described.

The figures only show the part of interest of the machine 1. For instance, the machine may also comprise a pouch making installation that is adapted to make individual pouches from heat-sealable film. These individual pouches are then transferred at a transfer point to the reciprocating beams conveyor 20 of the machine1 as shown.

For example, the machine 1 is provided with a device for vertically forming a tubular body of heat sealable film material, making horizontal welds at intervals across the tubular body, and cutting the welded tubular body by horizontal cuts into open topped pouches that are then transferred to the horizontally arranged reciprocating beams conveyor for further pouch related processing at various stations along the conveyor. For example, the machine is structured as disclosed in US2017/0096247.

Generally, the machine 1 comprises a frame 2 that supports multiple pouch related process stations 10 - 18arranged on the frame 2 in series along a horizontal path.

The stations 10 - 18 each are configured to perform a step of an entire production cycle.

Herein, for example, station 10 opens the top end of the pre-made pouch 5 by moving the vertical side edges near the open top closer together.

Herein, for example, station 11 further opens the pouch top by inserting an opener member into the somewhat opened pouch.

Herein, for example, station 12 fills a first volume of a liquid in the opened pouch, e.g. having a filling nozzle introduced into the open top.

Herein, for example, station 13 fills a second and final volume into the opened pouch, e.g. at a lower flow rate than the station 12.

Herein, for example, station 14 somewhat stretches the top end of the pouch

Herein, for example, station 15 introduces a capped plastic spout into the open top and performs a first sealing step to adhere the spout to the pouch

Herein, for example, stations 16, 17 perform further heat sealing steps to seal the spout to the pouch and completely close the top of the pouch

Herein, for example, station 18 forms a discharge station where the filled and closed pouches 5 are dropped, e.g. onto chute 19 below the discharge end of the conveyor 20.

An inventive reciprocating beams conveyor 20 is provided, which is adapted to advance pouches 5 intermittently in the horizontal path along the series of multiple stations 10 - 18.

In generally it is assumed in this example that open topped individual pouches 5 are fed to the entry or take-up side of the conveyor 20. These pouches 5 are then to be opened to allow for access of a filling nozzle of a filling station, here a liquid filling station that fills a liquid, into the pouch. The still open topped pouch is then conveyed onwards to further stations that seal or close the pouch. Here the machine comprises a station to place a capped plastic spout into the open top of the pouch, which spout in then heat-sealed in multiple steps at stations 15,16,17. The then filled and sealed pouch is dropped from the conveyor 20 at discharge station 18 onto a chute device 19.

As explained herein the number of stations, their functionality, and design may all differ depending on the processing cycle that is desired.

The conveyor 20 has a left-hand side elongated reciprocating beam 21 and a right-hand side elongated reciprocating beam 22.

Each of these reciprocating beams 21, 22 is provided at intervals along the length thereof with pouch retention members 23, 24, in fact pairs of members 23, 24 as they are configured to clamp between them the opposite vertical side edges of the open topped pouches in this example.

As shown here, in an embodiment, each retention member 23, 24 is a stub or finger that projects from the respective beam 21, 22 towards the other beam, and as preferred a resilient tip member (see at 24) is provided on one or more of them to clamp the pouch in appropriate manner.

These pouch retention members 23, 24 are mounted on the respective beam 21, 22 in an adjustable manner, at least (as preferred) adjustable in longitudinal direction of the beam 21, 22. This allows to set the position of the pouch retention members 23, 24 in accordance with the type of pouch 5 to be handled, e.g. in according to the width of the pouch 5 at the location where the pouch retention members clamp the side edges. As shown the beams 21, 22 may comprise indicia, e.g. a ruler as here, to indicate the position of each pouch retention member.

The conveyor further comprises a left-hand side support member 27 and a right-hand side support member 28. Each of these support members 27, 28 supports a respective left-hand side and right-hand side reciprocating beam 21, 22. Also they each form a rectilinear guide for the respective beam 21, 22, parallel to one another and in a horizontal plane.

In the embodiment shown here each support member 27, 28 is provided with a V-profiled side edges rail 29 and corresponding rollers 30 that provide a rectilinear guidance of the beam relative to the support member 27, 28.

Before discussing the longitudinal reciprocating motion drive mechanism that is adapted to cause an intermittent reciprocating motion of the reciprocating beams in the longitudinal direction thereof, the transverse motion mechanism will be discussed here.

The frame 2 of the machine 1 is provided with rectilinear transverse guide members 40, 41, here one at the entry side of the conveyor 20 and one at the discharge side of the conveyor. In the depicted example each of these rectilinear transverse guide members 40, 41 has a pair of parallel horizontally arranged guide rods. On each pair of rods 40, 41 a pair of sliders 42, 43, 44, 45 is mounted so that these sliders 42, 43, 44, 45 can slide horizontally. The left-hand sliders 42, 44 are fitted to the left-hand support member 27 and the right-hand sliders 43, 45 to the right-hand support member 28, so that these members 27, 28 are guided to perform a rectilinear transverse motion of the left-hand side and a right-hand side support members away from and towards one another.

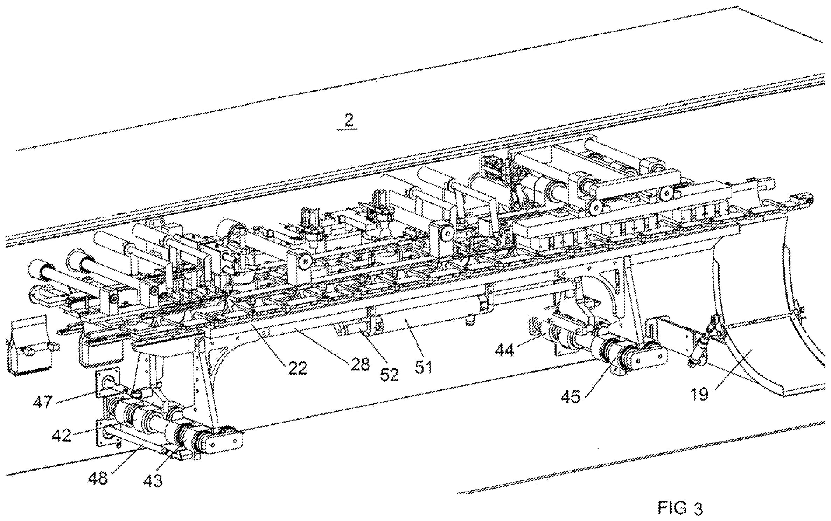

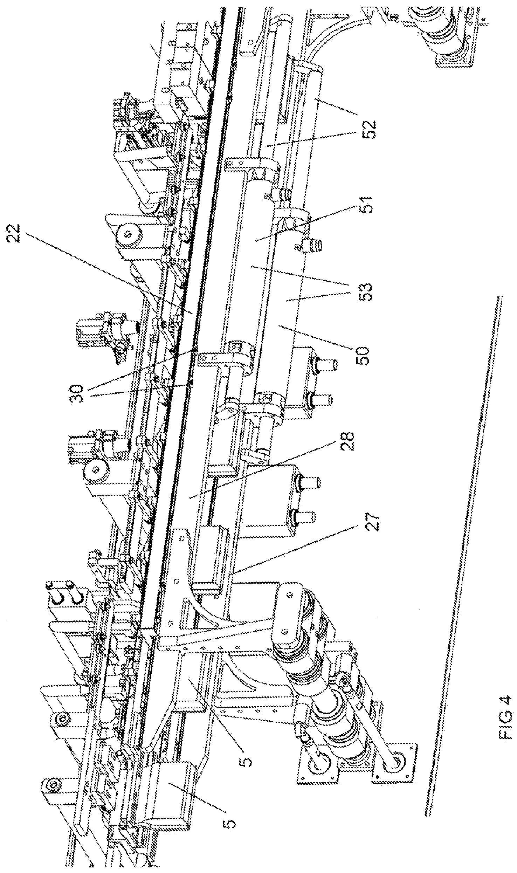

As can be seen e.g. in figures 3, 4 a transverse motion drive of the machine 1 is provided that is configured to cause a periodic rectilinear transverse motion of the left-hand side and a right-hand side support members away from and towards one another. Here, as an example, a drive link 47 connects to the left-hand slider and a drive link 48 connects to the right-hand slider, with the drive links being connected to a motorized drive (not shown) that causes the links 47, 48 to be driven in order for the beams 21, 22 to be moved towards and away from one another in order to clamp a pouch 5 between opposed pouch retention members 23, 24 of the left-hand and right-hand reciprocating beams 21, 22 and to release a pouch 5.

Generally, as the beams 21, 22 reach a forward stop position, pouch retention mechanisms associated with the various stations 10 - 17 take hold of the pouch(es) fed to the station, allowing the beams 21, 22 to be moved apart so that the pouches are released from the conveyor 20. Then the beams 21, 22 are returned to their rearward stop position, where the beams 21, 22 are being moved back towards one another to clamp the pouches 5 that are then released from the pouch retention arrangements associated with the various stations. The beams 21, 22, then advance the pouches 5 one step further along the path to the next station, and at the entry side of the conveyor 20 a new pouch is picked up and at the discharge side a pouch is discharged.

In order to obtain an intermittent reciprocating motion of the reciprocating beams 21, 22 in the longitudinal direction thereof the longitudinal reciprocating motion drive mechanism comprises a left-hand side electromagnetic linear actuator 50 and a right-hand side electromagnetic linear actuator 51.

Each of these electromagnetic linear actuators 50, 51 is mounted between the respective reciprocating beam 21, 22 and the respective support member 27,28.

These electromagnetic linear actuators 50, 51 are linked to an electronic controller 60 that is adapted to synchronize the motions of the electromagnetic linear actuators 50, 51 and thus of the longitudinal motion of the beams 21, 22.

As shown here the electromagnetic linear actuators 50, 51 are of the tubular linear motor type with a rod 52 wherein an array of magnets is housed and with a block 53 through which the rod is longitudinally mobile. In the block, or forcer,53 there are one or more electrical coils allowing to create a magnetic propulsion force in combination with the rod 52 when the one or more coils are energized. In the block 53 there is also a position sensor to sense the position of the rod 52 relative to the block 53. As preferred the position sensor monitors the position of the rod 52 on a continuous basis, so both during standstill and motion, e.g. as part of a servo control of the actuator.

In embodiments one or more bearings for the rod 52 are provided in the block 53.

As shown the block 53 is mounted to the respective support member 27, 28 and the rod 52is secured, at both ends thereof, to the respective reciprocating beam 21, 22. The rod 52is arranged parallel to the respective reciprocating beam 21, 22.

A cable connects to the actuator 50, 51 to feed electricity and control signals to the actuator.

The actuators 50, 51 preferably are integrated in a servo control system.

The controller 60 of the electromagnetic linear actuators 50, 51 is provided with a memory 70 wherein, for each of multiple pouch types a respective data set at least representing an actuator motion profile to be performed by each of the actuators 50, 51 when handling the corresponding pouch type. For example, each data set comprises a profile of linear speed and/or acceleration of the electromagnetic linear actuator 50, 51 as well as stop positions of the electromagnetic linear actuator. Preferably the data set also contains data representing the transverse motions of the beams 21, 22 governed by the transverse motion drive.

The machine comprises an operator selector device, e.g. a touchscreen 80, configured to allow a machine operator to select a pouch type, e.g. from a list displayed on the screen 80. The controller 60 is configured to select a data set that has been stored in the memory 70 on the basis of the pouch type selection and to control the reciprocating beams conveyor accordingly.

In an embodiment the machine comprises a display, e.g. a touchscreen, and the controller is configured to display thereon a selected actuator motion profile in graphical form, e.g. as a graph or graphs representing speed and/or acceleration/deceleration in relation to longitudinal position of the reciprocating beams

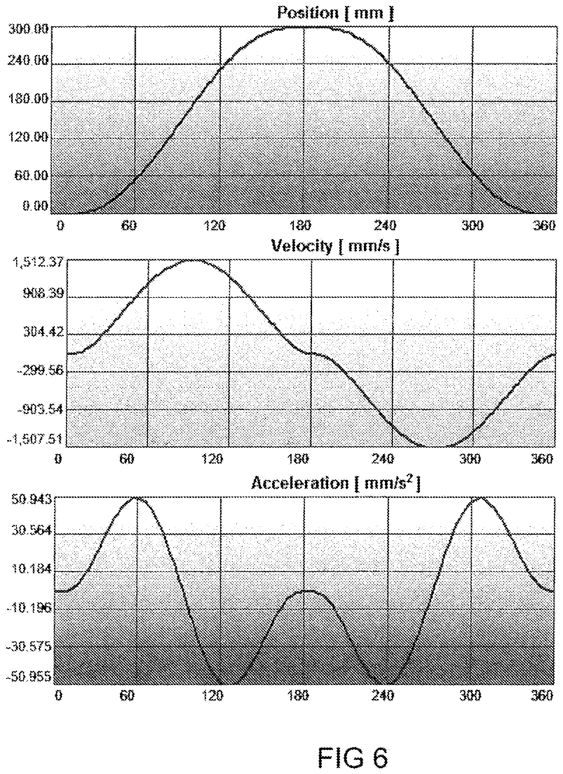

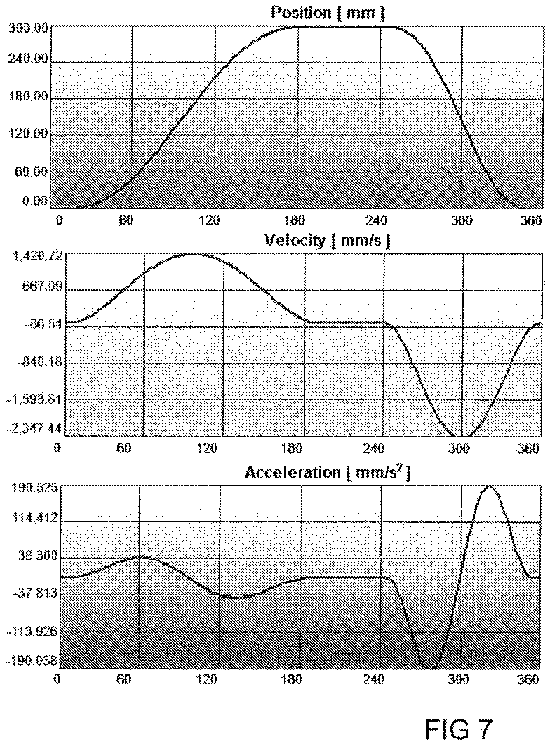

The inventive drive is highly advantageous over the prior art design, which can for instance be appreciated from a discussion with reference to figures 6 and 7.

Herein figure 6 shows exemplary graphs of longitudinal position, speed, and accelerations of the reciprocating beams as obtained by a drive of the type discussed in ES 1 040 575, whereas figure 7 shows exemplary graphs of longitudinal position, speed, and accelerations of the reciprocating beams as obtained by a drive according to the invention.

The prior art mechanical rocker arm and linkage rods drive causes basically a symmetrical speed and accelerations profile for the longitudinal forward and return motions. An increase of overall hourly speed of such a prior art machine, will inevitably result in increased accelerations during the forward motion. As explained, for example when handling an open topped pouch that has been filled with liquid at a filling station, increase increased accelerations and/or decelerations may lead to undue sloshing of the liquid and possible spillage. The latter is of course highly undesirable, not only due to soiling of the machine but also inaccuracy of the filled volume and/or problems associated with heat sealing the pouch and/or sealing a spout into the open top. Also, it can be seen that the periods wherein the beams are more or less at standstill are very brief.

The figure 7, which is merely an example as the motions of the electromagnetic linear actuators 50, 51 are basically freely programmable, evidences already that the return motion can be completely different from the forward motion. So, as shown, the forward motion can be controlled to be gentle, with limited changes in speed and thus reduced or limited accelerations and/or decelerations, whereas the return motion can be very rapid with high accelerations and/or decelerations. For example, the return motion can comprise accelerations of above 100 mm/s2. It will thus be appreciated that the overall speed of the machine can be increased, even when handling open topped pouches filled with a watery liquid, by optimizing the return motion for speed whilst optimizing the forward motion for gentle handling. Also, if desired, a prolonged period of standstill can be programmed, as illustrated in figure 7.

Clearly a problem like sloshing of a watery liquid in the pouch, or some other liquid product, may also depend on the type of pouch to be handled, the filling level, etc. Therefore, the provision of a memory with predefined data sets for the controller 60 that controls the actuators 50, 51 may be very advantageous as it will allow an operator to quickly choose the correct settings for the production run on the machine.

## Claims

1. A pouch handling machine (1) comprising a frame (2), multiple pouch related process stations (10 - 18) arranged on the frame in series, and a reciprocating beams conveyor (20) that is adapted to advance pouches (5) intermittently in a horizontal path along said series of multiple stations, wherein the reciprocating beams conveyor comprises:
- a left-hand side and a right-hand side elongated reciprocating beam (21,22), each of said reciprocating beams being provided at intervals along the length thereof with pouch retention members (23,24),
- a left-hand side and a right-hand side support member (27,28), each of said support members supporting and forming a linear guide for said left-hand side and right-hand side reciprocating beam (21,22) respectively,
- a longitudinal reciprocating motion drive mechanism adapted to cause an intermittent reciprocating motion of the reciprocating beams in the longitudinal direction thereof,
- a transverse motion mechanism (40 - 45, 47, 48) adapted to cause a periodic transverse motion of the left-hand side and a right-hand side support members (23,24) towards and away from one another in order to clamp a pouch between opposed pouch retention members of the left-hand and right-hand reciprocating beams and to release a pouch,
**characterized in that**
the longitudinal reciprocating motion drive mechanism comprises a left-hand side and a right-hand side electromagnetic linear actuator (50,51), each of said electromagnetic linear actuators being mounted between the respective reciprocating beams (21,22) and the respective support member (27,28),
and **in that** said electromagnetic linear actuators (50,51) are linked to an electronic controller (60) that is adapted to synchronize the motions of the electromagnetic linear actuators,
said controller (60) is provided with a memory (70) wherein, for each of multiple pouch types a respective data set at least representing an actuator motion profile to be performed by each of the actuators (50,51) when handling the corresponding pouch type, e.g. wherein the data set comprises a profile of linear speed and/or acceleration of the electromagnetic linear actuator as well as stop positions of the electromagnetic linear actuator.

2. A pouch handling machine according to claim 1, wherein the electromagnetic linear actuators (50,51) are of the tubular linear motor type with a rod (52) wherein an array of magnets is housed and with a block (53) through which said rod is longitudinally mobile and with one or more electrical coils in said block adapted to create a magnetic propulsion force in combination with said rod when the one or more coils are energized.

3. A pouch handling machine according to claim 2, wherein the block (53) is mounted to the respective support member (27,28) and wherein the rod (52) is secured, e.g. at both ends thereof, to the respective reciprocating beam (21,22).

4. A pouch handling machine according to claim 2 or 3, wherein the rod (52) is arranged parallel to the respective reciprocating beam (21,22).

5. A pouch handling machine according to any one of claims 1 - 4, wherein the frame of the machine is provided with rectilinear transverse guide members (40,41), and wherein the support members (27,28) are mounted (42-45) on said transverse guide members such that the transverse motion mechanism (47,48) causes a periodic rectilinear transverse motion of the left-hand side and a right-hand side support members away from and towards one another.

6. A pouch handling machine according to any one of claims 1 - 5, wherein said pouch process stations comprises one or more of:
- a sterilization station,
- a filling station (12,13),
- a spout placement station (15),
- a spout sealing station (15,16,17),
- a pouch sealing station,
- a spout capping station.

7. A pouch handling machine according to any one of claims 1 - 6, wherein said pouch process stations comprises a liquid filling station (12,13) adapted to fill the pouches (5) with a liquid.

8. Pouch handling machine according to any one of claims 1 - 7, wherein the machine comprises upstream of the reciprocating beams conveyor a pouch making installation adapted to make individual pouches from heat-sealable film, said individual pouches being transferred at a transfer point to the reciprocating beams conveyor of the machine.

9. A pouch handling machine according to claim 1, wherein the machine comprises an operator selector device, e.g. a touchscreen (80), configured to allow a machine operator to select a pouch type, and wherein the controller (60) is configured to select a data set in stored in said memory (70) on the basis of the pouch type selection and to control the reciprocating beams conveyor accordingly.

10. A pouch handling machine according to claim 1 or 9, wherein the machine comprises a display, e.g. a touchscreen (80), and wherein the controller is configured to display thereon a selected actuator motion profile in graphical form, e.g. as a graph or graphs representing speed and/or acceleration/deceleration in relation to longitudinal position of the reciprocating beams

11. A method for handling pouches (5), e.g. filling and sealing pouches, e.g. with a liquid, wherein use is made of a pouch handling machine (1) according to one of the preceding claims, the method comprising the step of selecting a pouch type, e.g. on a touchscreen (80), by an operator, wherein the controller selects on the basis thereof a respective actuator motion profile data set from the memory and controls the reciprocating beams conveyor accordingly.

## Patentansprüche

1. Beutelhandhabungsmaschine (1), die einen Rahmen (2), eine Mehrzahl von Beutelverarbeitungsstationen (10 - 18), die auf dem Rahmen hintereinander angeordnet sind, sowie einen Förderer (20) mit hin- und hergehenden Balken aufweist, der dazu ausgelegt ist, Beutel (5) intermittierend auf einer horizontalen Bahn längs der Reihe von mehreren Stationen vorwärts zu bewegen, wobei der Förderer mit hin- und hergehenden Balken Folgendes aufweist:
- einen langgestreckten hin- und hergehenden Balken (21, 22) auf der linken Seite und der rechten Seite, wobei jeder der hin- und hergehenden Balken in Intervallen über seine Länge mit Beutelhalteelementen (23, 24) ausgerüstet ist,
- ein Trägerelement (27, 28) auf der linken Seite und der rechten Seite, wobei jedes der Trägerelemente eine lineare Führung für die hin- und hergehenden Balken (21, 22) auf der linken Seite und der rechten Seite bildet und abstützt,
- einen longitudinalen Antriebsmechanismus für eine Hin- und Herbewegung, der dazu ausgelegt ist, eine intermittierende Hin- und Herbewegung der hin- und hergehenden Balken in der Längsrichtung zu bewirken,
- einen Querbewegungsmechanismus (40 - 45, 47, 48), der dazu ausgelegt ist, eine periodische Querbewegung der Trägerelemente auf der linken Seite und der rechten Seite aufeinander zu und voneinander weg zu bewirken, um einen Beutel zwischen gegenüberliegenden Beutelhalteelementen der hin- und hergehenden Balken auf der linken Seite und der rechten Seite einzuklemmen sowie einen Beutel freizugeben,
**dadurch gekennzeichnet,**
**dass** der longitudinale Antriebsmechanismus für eine hin- und hergehende Bewegung einen elektromagnetischen linearen Aktuator (50, 51) auf der linken Seite und der rechten Seite aufweist, wobei jeder von den elektromagnetischen linearen Aktuatoren zwischen dem jeweiligen hin- und hergehenden Balken (21, 22) und den jeweiligen Trägerelementen (27, 28) angebracht ist, und dass die elektromagnetischen linearen Aktuatoren (50, 51) mit einer elektronischen Steuerung (60) gekoppelt sind, die dazu ausgelegt ist, die Bewegungen der elektromagnetischen linearen Aktuatoren zu synchronisieren,
wobei die Steuerung (60) mit einem Speicher (70) versehen ist, wobei für jeden von einer Vielzahl von Beuteltypen ein jeweiliger Datensatz vorgesehen ist, der zumindest ein Aktuatorbewegungsprofil repräsentiert, das von jedem der Aktuatoren (50, 51) durchzuführen ist, wenn der jeweilige Beuteltyp gehandhabt wird, wobei der Datensatz beispielsweise ein Profil einer linearen Geschwindigkeit und/oder Beschleunigung der elektromagnetischen linearen Aktuatoren sowie Stopp-Positionen der elektromagnetischen linearen Aktuatoren aufweist.

2. Beutelhandhabungsmaschine nach Anspruch 1, wobei die elektromagnetischen linearen Aktuatoren (50, 51) vom rohrförmigen Linearmotortyp mit einer Stange (52), wobei eine Anordnung von Magneten untergebracht ist, und mit einem Block (53) ausgebildet sind, durch den die Stange in Längsrichtung beweglich ist, und mit einer oder mehreren elektrischen Spulen in dem Block, die dazu ausgebildet sind, eine magnetische Vorschubkraft in Kombination mit der Stange zu erzeugen, wenn die eine oder die mehreren Spulen erregt werden.

3. Beutelhandhabungsmaschine nach Anspruch 2, wobei der Block (53) an dem jeweiligen Trägerelement (27, 28) angebracht ist und wobei die Stange (52), zum Beispiel an ihren beiden Enden, an den jeweiligen hin- und hergehenden Balken (21, 22) befestigt ist.

4. Beutelhandhabungsmaschine nach Anspruch 2 oder 3, wobei die Stange (52) parallel zu den jeweiligen hin- und hergehenden Balken (21, 22) angeordnet ist.

5. Beutelhandhabungsmaschine nach einem der Ansprüche 1 bis 4, wobei der Rahmen der Maschine mit geradlinigen Querführungselementen (40, 41) ausgerüstet ist und wobei die Trägerelemente (27, 28) an den Querführungs-elementen derart angebracht sind (42-45), dass der Querbewegungsmechanismus (47, 48) eine periodische geradlinige Querbewegung der Trägerelemente auf der linken Seite und der rechten Seite voneinander weg und aufeinander zu hervorruft.

6. Beutelhandhabungsmaschine nach einem der Ansprüche 1 bis 5, wobei die Beutelverarbeitungsstationen eine oder mehrere der folgenden Stationen aufweisen:
- eine Sterilisierungsstation,
- eine Füllstation (12, 13),
- eine Auslass-Anbringungsstation (15),
- eine Auslass-Abdichtungsstation (15, 16, 17),
- Beutelabdichtungsstation,
- eine Auslass-Abdeckstation.

7. Beutelhandhabungsmaschine nach einem der Ansprüche 1 bis 6, wobei die Beutelverarbeitungsstationen eine Flüssigkeits-Füllstation (12, 13) aufweisen, die dazu ausgelegt ist, die Beutel (5) mit einer Flüssigkeit zu füllen.

8. Beutelhandhabungsmaschine nach einem der Ansprüche 1 bis 7, wobei die Maschine stromaufwärts von dem Förderer mit hin- und hergehenden Balken eine Beutelherstellungsinstallation aufweist, die dazu ausgelegt ist, individuelle Beutel aus einer heißsiegelfähigen Folie herzustellen, wobei die individuellen Beutel an einer Übergabestelle auf den Förderer mit hin- und hergehenden Balken der Maschine überführt werden.

9. Beutelhandhabungsmaschine nach Anspruch 1, wobei die Maschine eine Bedienungs-Wähleinrichtung, beispielsweise einen Touchscreen (80) aufweist, der dazu ausgelegt ist, es einem Maschinenbenutzer zu ermöglichen, einen Beuteltyp zu wählen, und wobei die Steuerung (60) dazu ausgelegt ist, einen in dem Speicher (70) gespeicherten Datensatz zu wählen, und zwar auf der Basis des gewählten Beuteltyps, und den Förderer mit hin- und hergehenden Balken dementsprechend zu steuern.

10. Beutelhandhabungsmaschine nach Anspruch 1 oder 9, wobei die Maschine ein Display, beispielsweise einen Touchscreen (80) aufweist, und wobei die Steuerung dazu ausgelegt ist, darauf ein gewähltes Aktuatorbewegungsprofil in graphischer Form darzustellen, beispielsweise in Form eines Graphen oder von Graphen, die die Geschwindigkeit und/oder Beschleunigung/Abbremsung in Relation zu der longitudinalen Position der hin- und hergehenden Balken darstellen.

11. Verfahren zum Handhaben von Beuteln (5), beispielsweise zum Füllen und Verschließen von Beuteln, beispielsweise mit einer Flüssigkeit, wobei eine Beutelhandhabungsmaschine (1) nach einem der vorhergehenden Ansprüche verwendet wird, wobei das Verfahren den Schritt der Auswahl eines Beuteltyps umfasst, beispielsweise auf einem Touchscreen (80), von einem Benutzer der Maschine, wobei die Steuerung auf der Basis von diesem Typ einen jeweiligen Aktuatorbewegungsprofil-Datensatz aus dem Speicher wählt und den Förderer mit hin- und hergehenden Balken dementsprechend steuert.

## Revendications

1. Machine de manipulation de sacs (1) comprenant un châssis (2), de multiples stations de traitement de sacs (10-18) agencées sur le châssis en série, et un convoyeur à poutres à mouvement alternatif (20) qui est adapté pour faire avancer par intermittence les sacs (5) dans un trajet horizontal le long de ladite série de stations multiples, dans laquelle le convoyeur à poutres à mouvement alternatif comprend:
- une poutre allongée à mouvement alternatif (21, 22) sur le côté gauche et une autre sur le côté droit, dont chacune est munie, à intervalles sur sa longueur, de dispositifs de retenue des sacs (23, 24).
- un dispositif de support gauche et un dispositif de support droit (27, 28), dont chacun supporte et forme un guide linéaire pour ladite poutre de réception gauche et droite (21, 22) respectivement.
- un mécanisme d'entraînement du mouvement alternatif longitudinal adapté pour provoquer un mouvement alternatif intermittent des poutres à mouvement alternatif dans leur direction longitudinale,
- un mécanisme de mouvement transversal (40-45, 47, 48) adapté pour provoquer un mouvement transversal périodique des éléments de support du côté gauche et du côté droit (23, 24) en les rapprochant et en les éloignant l'un de l'autre afin de serrer un sac entre des éléments de rétention de sac opposés des poutres à mouvement alternatif de gauche et de droite et de libérer un sac,
**caractérisé en ce que**
le mécanisme d'entraînement du mouvement alternatif longitudinal comprend un actionneur linéaire électromagnétique du côté gauche et du côté droit (50, 51), chacun desdits actionneurs linéaires électromagnétiques étant monté entre les poutres alternatives respectives (21, 22) et l'élément de support respectif (27, 28),
et **en ce que** lesdits actionneurs électromagnétiques linéaires (50, 51) sont reliés à un contrôleur électronique (60) qui est adapté pour synchroniser les mouvements des actionneurs électromagnétiques linéaires,
ledit contrôleur (60) est pourvu d'une mémoire (70) dans laquelle, pour chacun des multiples types de sachets, un ensemble de données respectif représentant au moins un profil de mouvement d'actionneur à réaliser par chacun des actionneurs (50, 51) lors de la manipulation du type de sachet correspondant, par exemple dans lequel l'ensemble de données comprend un profil de vitesse linéaire et/ou d'accélération de l'actionneur linéaire électromagnétique ainsi qu'une position d'arrêt de l'actionneur linéaire électromagnétique.

2. Machine de manipulation de sacs selon la revendication 1, dans laquelle les actionneurs électromagnétiques linéaires (50, 51) sont du type moteur linéaire tubulaire avec une tige (52) dans laquelle est logée une matrice d'aimants et avec un bloc (53) à travers lequel ladite tige est mobile longitudinalement et avec une ou plusieurs bobines électriques dans ledit bloc adaptées pour créer une force de propulsion magnétique en combinaison avec ladite tige lorsque la ou les bobines sont alimentées.

3. Machine de manipulation de sacs selon la revendication 2, dans laquelle le bloc (53) est monté sur l'élément de support respectif (27, 28) et dans laquelle la tige (52) est fixée, par exemple à ses deux extrémités, à la poutre alternative respective (21, 22).

4. Machine de manipulation de sacs selon la revendication 2 ou 3, dans laquelle la tige (52) est disposée parallèlement à la poutre alternative respective (21, 22).

5. Machine de manipulation de sacs selon l'une quelconque des revendications 1 à 4, dans laquelle le châssis de la machine est muni d'éléments de guidage transversaux rectilignes (40, 41), et dans laquelle les éléments de support (27, 28) sont montés (42, 45) sur lesdits éléments de guidage transversaux de telle sorte que le mécanisme de déplacement transversal (47, 48) provoque un déplacement transversal rectiligne périodique des éléments de support de gauche et de droite en s'éloignant et en se rapprochant l'un de l'autre.

6. Machine de manipulation de sachets selon l'une quelconque des revendications 1 à 5, dans laquelle lesdits postes de traitement de sachets comprennent un ou plusieurs des éléments suivants :
- une station de stérilisation,
- une station de remplissage (12, 13),
- une station de mise en place du bec verseur (15),
- une station de scellement de becs (15, 16, 17),
- une station de scellement de sac,
- une station de bouchage de bec.

7. Machine de traitement de sacs selon l'une quelconque des revendications 1 à 6, dans laquelle lesdits postes de traitement de sacs comprennent un poste de remplissage de liquide (12, 13) adapté pour remplir les sacs (5) avec un liquide.

8. Machine de manipulation de sacs selon l'une quelconque des revendications 1 à 7, dans laquelle la machine comprend, en amont du convoyeur à poutres à mouvement alternatif, une installation de fabrication de sacs adaptée pour fabriquer des sacs individuels à partir d'un film thermosoudable, lesdits sacs individuels étant transférés en un point de transfert au convoyeur à poutres à mouvement alternatif de la machine.

9. Machine de manipulation de sacs selon la revendication 1, dans laquelle la machine comprend un dispositif de sélection d'opérateur, par exemple un écran tactile (80), configuré pour permettre à un opérateur de machine de sélectionner un type de sac, et dans laquelle le contrôleur (60) est configuré pour sélectionner un ensemble de données stockées dans ladite mémoire (70) sur la base de la sélection du type de sac et pour commander le convoyeur à poutres en va-et-vient en conséquence.

10. Machine de manipulation de sacs selon la revendication 1 ou 9, dans laquelle la machine comprend un affichage, par exemple un écran tactile (80), et dans laquelle le contrôleur est configuré pour afficher sur celui-ci un profil de mouvement d'actionneur sélectionné sous forme graphique, par exemple sous la forme d'un graphique ou de graphiques représentant la vitesse et/ou l'accélération/décélération par rapport à la position longitudinale des poutres en mouvement alternatif.

11. Procédé pour manipuler des sacs (5), par exemple remplir et sceller des sacs, par exemple avec un liquide, dans lequel on utilise une machine de manipulation de sacs (1) selon l'une des revendications précédentes, le procédé comprenant l'étape consistant à sélectionner un type de sac, par exemple sur un écran tactile (80), par un opérateur, dans lequel le contrôleur sélectionne sur la base de celui-ci un ensemble de données de profil de mouvements d'actionneur respectif à partir de la mémoire et commande le convoyeur à poutres à mouvement alternatif en conséquence.
